# EUROPEAN PATENT APPLICATION

(11) **EP 1 501 029 A2**
(43) Date of publication of application: **26.01.2005**
(21) Application number: 04001900.2
(22) Date of filing: 29.01.2004
(51) Int. Cl.: G06F 17/60

(54) **A system for management and inspection of an asset system and a method to be used in said system**

(30) Priority: 18.06.2003 US 464685
(71) Applicant: Xybernaut Corporation, Fairfax, Virginia 22033 (US)
(72) Inventor: Maddox, Edward P. Jr., Reston VA 20194 (US)
(74) Representative: Borchert, Uwe Rudolf, Dipl.-Ing.

(57) **Abstract**

A maintenance and inspection system integrates at least two software modules including a computerized maintenance management system, an electronic performance support system, forms management system, and video messaging system running on a host sever thus allowing a maintenance and inspection user with complementary software modules the ability to collect and access data and communicate with experts not in the field

## Description

The invention relates to a system for management and inspection according to the preamble of claim 1 and to a method to be used in said system.

This invention relates generally to maintenance and inspection systems. Specifically, this invention relates to an automated computerized maintenance and inspection management system used to manage and track maintenance and inspection work orders.

Computerized Maintenance Management Systems (CMMS) are tools for planning and scheduling asset or equipment inspections, maintenance and repairs to meet the needs of modern plants and facilities. Using information about assets, CMMS software schedules maintenance, repairs, and inspections of such assets. CMMS software notifies operations personnel when a maintenance activity is necessary and is used to plan and track the performance of the required activity. Examples of CMMS software includes MAXIMO system, offered by Project Software & Development, Inc. (PSDI), of Cambridge, Massachusetts, DATASTREAM 7i, offered by Datastream of Greenville, South Carolina, and PASSPORT, offered by Indus International of San Francisco, California, or any other suitable software package.

Electronic Performance Support Systems (EPSS) are software applications that improve both the quality and the speed of work by providing users with actionable, context-specific knowledge and guidance on demand, right at the point of work. Performance support systems improve work performance by integrating multiple forms of technical data such as procedures, equipment diagrams, instructional animation or Computer-Based Training - CBT - clips, tips from experienced subject matter experts, and other information resources in one portable, mobile, paperless job aid. Multimedia such as refresher training clips are delivered in job-specific, "task-based" clusters that follow specific job sequences. Performance Support Systems are similar to Interactive Electronic Technical Manuals - IETMs - but provide users with richer information resources tailored to specific tasks and job roles. Examples of EPSS software includes MAINT-X, offered by REI Systems of Annandale, Virginia, Knowledge Stream, offered by Upstream Development, LLC of Milwaukee, Wisconsin, and AWARE, offered by Automation Technology Incorporated of San Jose, California, or any other suitable software package.

Video Messaging Systems - VMS - are software applications that give a field technician the capability of receiving assistance from non co-located experts. Features of these software solutions include real-time interaction tools, in addition to live audio/video transport, include simultaneous remote/host real-time video annotation, image cataloging and annotation, audio interaction, file transfer and document sharing. Additional documentation capabilities include video capture and annotation for audio over video, text and symbols. Examples of VMS include Remote Technical Assistance Support System - RTASS -, offered by Oxford Technologies of Friendswood, Texas, NetMeeting, offered by Microsoft Corporation of Seattle, Washington, Instant Communicator, offered by Userplane of Los Angeles, California, and Trillian Pro, offered by Cerulean Studios of Connecticut, or any other suitable software package.

While various vendors provide CMMS, EPSS, or VMS capabilities, they are currently provided in a standalone mode. There is no integration between these classes of software. As such vital inefficiencies exist as a user attempts to move from one piece of supporting software to the next when performing a maintenance or inspection task. It is extremely cumbersome for a user to attempt to use these different pieces of software in concert. Currently they would be required to open each piece of software independently, and then navigate to the appropriate functional location and content area for each. This requires manipulating various "windows," menu systems, data listings, etc. For example, when a user has non-interacting or non-integrated systems and needs assistance from a training video to repair a piece of equipment, the user would have to close or minimize the work order or procedure list that is currently open and open another piece of software to view the training video.

In addition, in conjunction with the software navigation, most users are also required to collect data and complete paper based forms as part of the overall work process.

It is therefore an object of this invention to provide a maintenance management and inspection system which is devoid of the above mentioned shortcomings. It is also an object of this invention to increase productivity and efficiency combining or linking at least two software modules to work interactively. It is another object of this invention to allow a maintenance and inspection user the ability to work on an asset and complete the required forms at the same time. It is a further object of this invention to allow a maintenance and inspection user the ability to review and edit forms at the work site before submitting them to a supervisor.

These and additional objects of the present invention are accomplished generally through the integration or dynamic linking of at least two software modules including Computerized Maintenance Management Systems (CMMS), Electronic Performance Support System - EPSS -, and Video Messaging System - VMS - running on a host server and in communication with at least one remote user.

Another preferred embodiment of the present invention is the integration or dynamically linking of at least three software modules including Computerized Maintenance Management Systems - CMMS -, Electronic Performance Support System - EPSS -, Video Messaging System - VMS -, and Forms Management System - FMS - running on a host server and in communication with at least one remote user. The FMS module supports the automation of recreating existing paper based forms, with completed data, by combining electronic forms with data collected within and exported or extracted from either a CMMS or EPSS.

Therefore, a primary objective of the invention is achieving productivity gains for maintenance and inspection user through advanced automation. Specifically this automation is achieved in the area of enhancements and integration between CMMS, EPSS, and VMS software. The description above listed examples of CMMS, EPSS, and VMS software; however, any other suitable CMMS, EPSS, and VMS software package may be used.

By streamlining and directing the flow and navigation between the different software components, overall use is significantly simplified and enhanced. Users can more seamlessly go from one component to the next with out having to explicitly open each package and navigating to the appropriate function/content locations. In addition, allowing on-line data collection as the processes are performed, and then providing the ability of the user to output the completed or near completed forms at the end of the process, not only provides significant productivity improvements, but also improves data tracking and audit-ability by making the data available in electronic format. Finally, by providing process history and state information to other participants in a messaging session, valuable time is saved by having all participants aware of the current state and status of the process "to date." This not only improves productivity, by not having to spend time to get all participants up to speed, it also improves the quality of the session by providing information on the events leading up to the current messaging session.

The typical maintenance and inspection user's (hereafter user) daily activities are predominately directed by assigned work orders. Work orders tell the user the asset or piece of equipment to be maintained or inspected, and the job that is to be performed. It may also provide supporting information such as simple steps or tasks list, and a parts list. Work orders can be manually generated or generated via a CMMS package. For complex inspection or maintenance tasks, given the skill or experience level of the user, the basic information provided by the work order may not be sufficient enough to complete the work order. In the invention, using a computer, a user would have a list of their currently assigned work orders. From this list, they can launch or select the work order they are currently working on, and from this list or a details form, launch an EPSS system. The EPSS will automatically go to the proper procedure for the work order. Within the EPSS, the user can then go through the procedural steps as necessary. For each step, the EPSS may provide supporting information such as additional descriptive information, location drawings, assembly drawings, schematics, OSHA warnings or notices, video clips, animation, images, parts lists, etc.

For the work order, the user may also be required to complete required forms. Completing paper based forms during this process can be particularly cumbersome and time consuming. In the invention, data can be collected electronically, on the computer, as each procedural step is performed. As the data is being collected, the user can also preview the forms, in their proper format, as they go to verify completeness. Upon completion of the procedure, this data can be posted to a host Forms Management System - FMS - to allow for management review, approval, output, and archive of the collected data.

On occasion, it is anticipated that even the EPSS procedural help will not be sufficient. In this case, the invention would have a VMS session launched from within the EPSS. When opening or creating the session, an audit trail of the completed steps and data collected for the current work order/procedure would be passed into the VMS so that supporting experts could quickly determine which step in the process that the user is currently at, and how they got there. At a minimum this would include the current work order header, procedure and step information. This information would also allow the expert support user to launch the EPSS software and go to the same procedure and step as the user.

By making the dissemination, processing, and update of work orders available on the client or mobile computers, the overall work order cycle is significantly enhanced and shortened, leading to significant productivity increases and cost reductions. The invention will contain a generic work order interface module that will run on the mobile computer and will communicate with legacy and commercial CMMS systems either via an XML or custom interface.

The foregoing and additional objects and advantages of the invention together with the structure characteristics thereof, which is only briefly summarized in the foregoing passages, becomes more apparent to those skilled in the art upon reading the detailed description and preferred embodiments, which follow in this specification, taken together with the illustration thereof presented in the representative accompanying drawings.

Additional advantages and characteristics result from the following description of several embodiments of the invention in connection with the drawings. In the drawings are shown:
- Figure 1: a functional diagram of the maintenance management and inspection system of the present invention;
- Figure 2: the Computerized Maintenance Management System (CMMS) module of the present invention;
- Figure 3: a preferred embodiment of the Electronic Performance Support System (EPPS) components of the present invention;
- Figure 4: a preferred embodiment of the Forms Management System (FMS) components of the present invention;
- Figure 5: the Forms Management System (FMS) components with combined EPSS/FMS client of the present invention;
- Figure 6: the Video Messaging System (VMS) components of the present invention;
- Figure 7: the Video Messaging System (FMS) with point to point client communication;
- Figure 8: a preferred embodiment of the CMMS to EPSS user interface;
- Figure 9: a process flow for the preferred embodiment of the CMMS to EPSS interface;
- Figure 10: a process flow for an alternative embodiment of the CMMS to EPSS interface;
- Figure 11: a process flow for another alternative embodiment of the CMMS to EPSS interface;
- Figure 12: the FMS and CMMS/EPSS interfaces;
- Figure 13: a process flow for an alternative embodiment of the FMS to CMMS interface;
- Figure 14: a process flow for an alternative embodiment of the FMS to EPSS interface;
- Figure 15: a process flow for an alternative embodiment of the FMS to other software interface;
- Figure 16: a still further embodiment of a FMS standalone/client interface;
- Figure 17: a preferred embodiment of the CMMS to VMS interface;
- Figure 18: a preferred embodiment to the interface between the EPSS and VMS, and
- Figure 19: a preferred embodiment to the interface between VMS to EPSS.

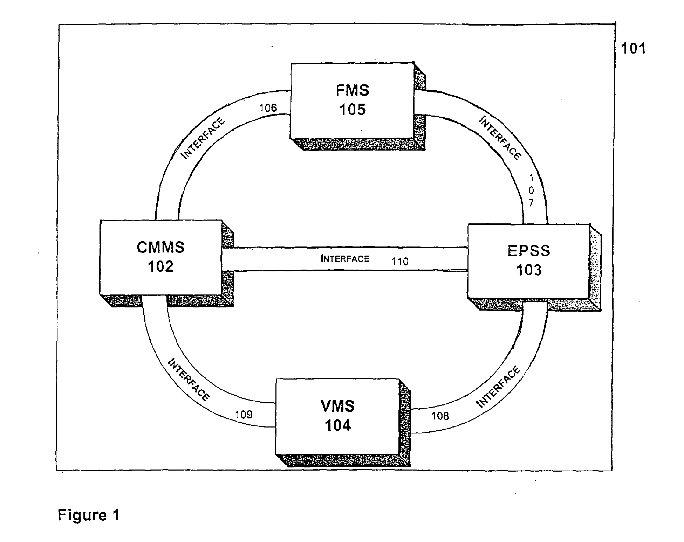

Discussion of the invention will now be made with specific references to the drawing figures and of the preferred embodiments. Figure 1 illustrates a functional diagram of the maintenance management and inspection system of the present invention. The host server 101 has installed and configured at least three software modules including a CMMS 102, EPSS 103, and VMS 104. An optional fourth module is FMS 104. The CMMS/FMS interface 106, FMS/EPSS interface 107, EPSS/VMS interface 108, VMS/CMMS interface 109, and CMMS/EPSS interface 110 allow each module to interact and communicate data between modules. The remote user has installed and configured on his mobile computer client software to access all host systems.

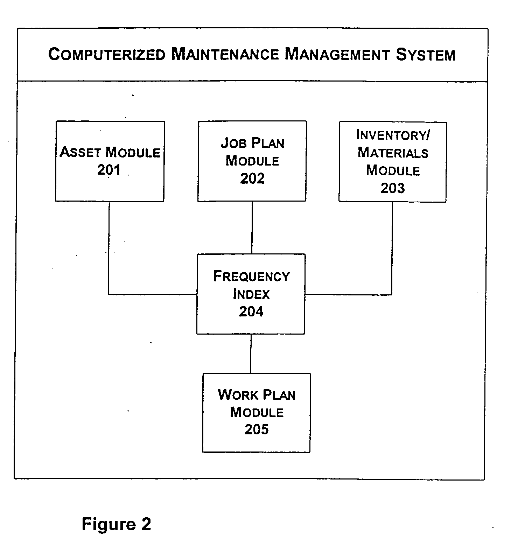

Figure 2 illustrates a preferred embodiment of the Computerized Maintenance Management System (CMMS) module of the present invention. CMMS is used to manage and track maintenance and inspection work orders. To accomplish this, the CMMS consists of several host server side sub components and several remote sub components running on the user's computer. Host server side components include an asset module 201, a job plan module 202, an inventory/materials module 203, a frequency index 204, and a work planning module 205.

The asset module 201 contains the functions that enable a user to maintain a comprehensive catalog of assets. This includes an inventory of equipment to be inspected, maintained, or repaired. Inventory information may include a unique asset identification and reference information such as description, serial and model number, vendor and parts data. This module may also include location and equipment hierarchy specification information. The asset module is also used for equipment usage monitoring - for unit based equipment - hours of use, miles driven, etc. -.

The job plan module 202 contains the functions that enable a user to develop standard job plans for maintenance and inspection tasks. This module supports the establishment of job plans/standards - or maintenance/inspection work standards - which includes the identification of the job, the designation of the steps required, and the designation of the resources, tools and inventory parts required to perform the job.

The inventory/materials module 203 contains the functions that enable a user to set up a complete inventory control system tied to the maintenance program. Full details of vendors, stock receipts, issues, and adjustments can be entered and maintained. By assigning materials requirements to each job, materials could be reserved when a work order is generated and authorized for release, and releasing the work order could be contingent on the necessary items being in stock.

The frequency index 204 is used to establish the maintenance/inspection plan via the use of a periodic maintenance index. This index allows for every asset (piece of equipment) in the asset module to be tied to a job in the job plans module. This paired asset-job combination can then be assigned a frequency for performance. This frequency can be either usage or time based, i.e. 3 months or 3000 miles.

The work planning module 205 contains the functions that enable a user to generate and monitor maintenance work orders. The functions of the Work Module would reflect the philosophy that all tasks should be controlled by work orders. Work orders can be generated either as the result of a request for corrective or emergency work, through the regular scheduling of maintenance or inspections - using the periodic maintenance index -, or as a result of an inspection process. This module supports the ability to create ad hoc work requests as necessary for corrective and emergency inspection and maintenance which become work orders once approved. The module also supports the systematic generation of work orders for regular inspections and preventative maintenance. Once generated, this module is used to perform authorizations, assignment, and subsequent tracking of the work order execution.

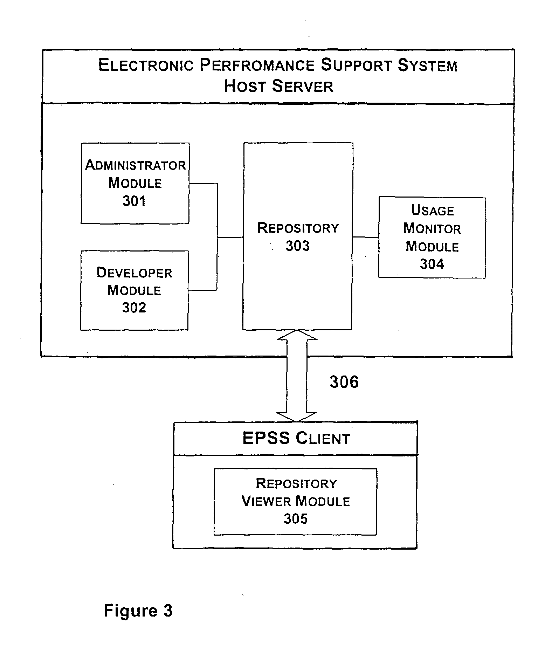

Figure 3 illustrates a preferred embodiment of the Electronic Performance Support System components of the present invention. The EPPS is the core component of the management and inspection system. It is the primary means of support for the remote maintenance and inspection users. The primary goal of the EPSS is to replace complex paper or electronic-based technical documentation with an electronic, interactive, multimedia supported task/work order procedure based documentation accessible on the user's remote computer. To accomplish this, the EPSS consists of several host server side sub components and several remote sub components running on the user's computer. The sub components running on the host server include an administrator console 301, developer console 302, repository 303, and a usage monitor module 304. The sub components running of the client side includes the repository viewer module 305.

The administrator module 301 is used to manage users, devices, and permissions. This module is used to publish the current content out to the repository and to push updates out to the remote user's devices, where applicable. This module is also where system users and their permissions are established.

The developer console module 302 has the capability of authoring or content management. This includes the ability to create the overall table of content/topic outline or how the data is organized, displayed, and accessed. At appropriate points within the topic outline, the developer module supports the ability to create electronic procedures or job plans, identify the required steps, and to identify/link to all appropriate supporting materials. This includes input of the narrative required for the step and the specification of any associated warnings and features associated with the step. Links include associated technical references, diagrams, parts lists, technical tips, video clips, inspection points, etc.

The repository module 303 is the current library or database of all topics and related reference information. The repository includes technical references, procedures, schematics, images, documents, video, and audio. This repository can be accessed either directly by client software or can be exported for remote use.

The usage monitor module 304 is used to monitor usage of the system/repository by the client viewers. This monitor is intended to support a manager or supervisor capacity. It is used not only for collecting usage statistics from the client users, but also to review and pass on any notes, comments, or updates from the clients.

Figure 3 also illustrates the EPSS remote computer sub components. The mobile computer sub components for the EPSS communicates with the host server through interface 306 and includes repository viewer module 305 to be used by a maintainer/inspector user in support of performing work orders. This module transforms actual work orders from the CMMS into interactive jobs on the mobile device. This module provides the user with the detailed procedural steps required to complete the work order. Each step can be augmented with images, video, audio, or links to technical reference material. Additionally, measurements can be recorded and compared against history or against predefined validation ranges. Once complete, the component also supports posting of the work order results back to the host CMMS system.

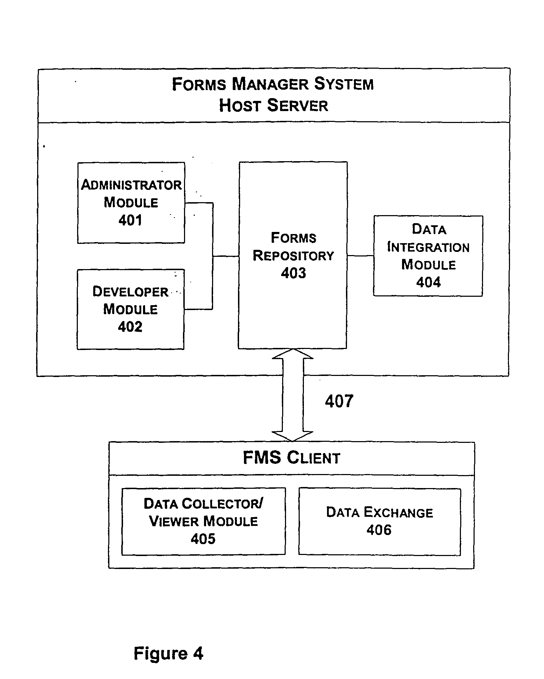

Figure 4 illustrates the Forms Management System components of the present invention. The FMS addresses a primary deficiency of both the CMMS and EPSS software. Neither the CMMS or EPSS software readily supports the specific work order or inspection collection and output formats that are required by either the end user organization, regulatory agencies, or potentially other interested parties. These forms typically require the input of information not necessarily required by the base CMMS and EPSS systems. These forms can require sophisticated formats including text, input boxes, tabular data, and images.

While CMMS systems do have a standard form used for work order assignment and data collection, it is a common occurrence for a user to have to collect additional information or fill out additional forms during the inspection or maintenance process. This process is not a standard EPSS function either. The EPSS provides generic job instructions and is not tied to a specific work order. The FMS is used to generate required customer based electronic and paper based forms that document the results of an inspection or maintenance process. The goal of the invention is to allow the remote user to input directly on the form, or walk through the steps in the EPSS, collecting information as they go and then have a completed form once they complete all the steps.

To accomplish automated forms integration into the maintenance and inspection process, the FMS consists of several host server side sub components and several remote sub components running on the user's computer. It also includes augmentation or integration with CMMS and/or EPSS. The sub components running on the host server include an administration module 401, a developer module 402, forms repository 403, and a forms data integration module 404. The sub component running on the remote client is forms data collection/viewer module 405 and a forms data exchange module 406. Augmentations to either the CMMS or EPSS could include the addition of data collection and data exchange capabilities.

The administrator module 401 is used to manage users and permissions. This module is also used to publish the current forms content out to the forms repository and to push updates out to the remote user's devices, where applicable.

The developer module 402 allows the user to manage the form templates, the metadata properties, the form layout, and the data mapping. Metadata/header information about the form - identification information, content description, standard job/procedure identification, creation date, last update/version number, and other attribute information - is stored in a database. The module will also contain authoring capability to develop the layout for the form templates. This authoring capability may incorporate XML technology. The description below uses XML as an example; however, it other suitable technology may be used. The form will be stored in an XML format. This module will also allow the user to create or import XML based forms. Each form can be stored either in a database or as a standalone file. This module will also support version tracking of the forms to augment the editing and updating process. Each form will have a set of data collection points. For each data collection point on a form, a unique Tag or identifier will be assigned to the associated input area, line, box, or table cell. These tags will allow for the mapping between the form and the collected data.

The forms repository module 403 is the current library or database of all form templates and all completed forms submitted from the field.

The forms data integration module 404 is the interface for collecting and reviewing forms and form data submissions from the remote clients. This module allows for the online review, printing, and archiving of the completed forms.

The FMS host server communicates to the FMS client through interface 407. The actual form data is collected on the FMS remote client. A preferred collection method is a specific FMS remote client forms data collection/viewer module 405. This client would present a selected form to remote user who could input the form data on-line into a facsimile of the form on a remote device. This data would be stored in XML format and would be submitted to the FMS host for review and output. In addition, this module combines the XML based form template with the XML based form data to create a data loaded form with can be output.

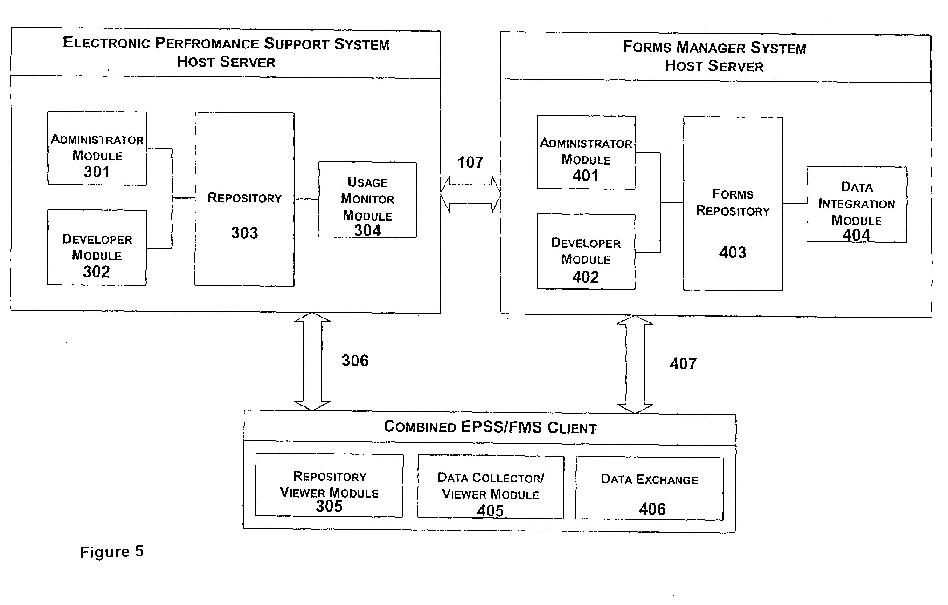

An alternative embodiment would include either a CMMS or EPSS augmentation that supports the creation of user defined data entry capability that can subsequently be tied to each work order and/or procedural step. Figure 5 illustrates forms management system components with combined EPSS/FMS client. The description of the EPPS host server and FMS host server is identical to the description of figure 3 and figure 4 above, respectively. Input data would have to be tagged with the same unique tags or tags mapped to the unique tags as those created for the form in the FMS developer module. These tags are then combined with the user collected input values to create and XML data file that would be submitted to the FMS host for review and output. In this embodiment, the CMMS/EPSS host system would share the FMS Form Templates and Form Data Mapping information. These would be tied to specific procedures. This information would reside in the repository to support the data collection, merging, and viewing on a combined EPSS/FMS or CMSS/FMS client.

The data exchange module 406 is used to submit all collected data to the host FMS data integration module 404. All data would be in XML data format. Once submitted, the data integration module would allow the collected data to be combined with the form templates for review, approval, output, and archive.

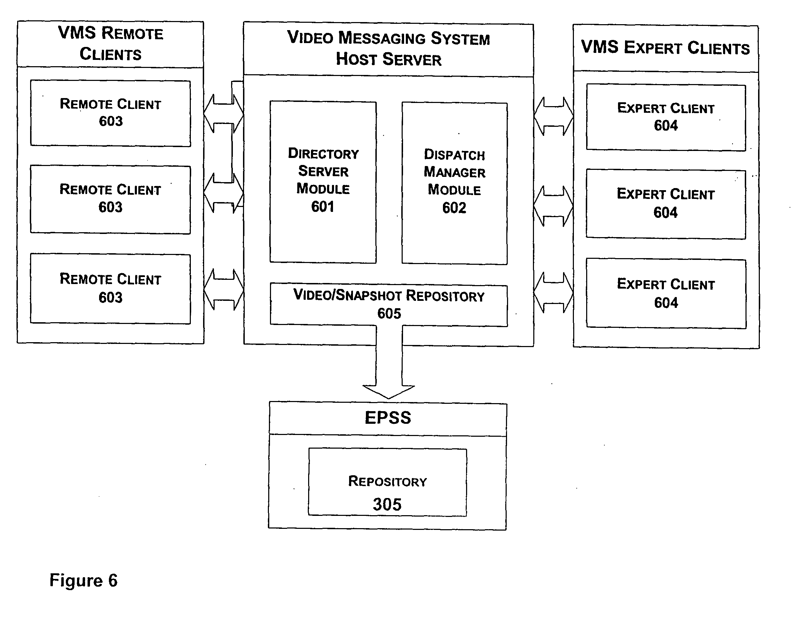

Figure 6 illustrates a preferred embodiment of the Video Messaging System - VMS - of the present invention. This system is used to provide real time online support for field technicians. VMS is essential in extensive maintenance and inspection applications were significant distances are encountered between the physical plant and or equipment being maintained or inspected. By making the remote expertise available on the mobile computers, the overall work order cycle is, again, further enhanced and shortened, leading to additional productivity increases and cost reductions. To accomplish this, the VMS consists of a host server side sub component and remote sub components running on the user's computer. Host server side subcomponents consist of the directory server 601 and dispatch manager 602. The remote subcomponents include a remote user client 603 and an expert user client 604.

The directory server module 601 is used to administer and monitor the entire VMS. This module provides a full time directory, or list of VMS users. It monitors who is logged on and who is not. It contains basic identification information about each user and contains critical addressing information for each user's remote devices. The VMS can support two basic communication modes. As depicted in Figure 6, all communication is channeled through the VMS host server.

The dispatch manager module 602 is used to manage sessions within the VMS. A session is initiated when either a remote or expert users attempt so use the VMS. Typically, when a remote user "calls" in, the dispatch manager module can be used to route the remote user to a desired subject mater expert. Conversely an expert can initiate a session to provide feedback to a remote user. This routing can occur in a manned or unmanned mode. A user can request a specific connection based on a downloaded address list. In addition, depending on the supporting information transmitted with the remote session request, rules can be established in the VMS that will allow the directory manager software to automatically route the session request to another appropriate user or users.

Using a video camera connected to a remote computer, with direct, dial-up or internet access capability, the remote user client 603 provides high quality video across low bandwidth. The client allows the user to record streaming video images on the computer screen, and then share those images, real-time with other VMS users, in a VMS session. Anyone connected to the session has the ability to communicate concurrently with the streaming video either by voice or by text messaging. In addition, the video image can be enhanced via annotation. Annotation lets any session user add shapes, i.e. circles, boxes, lines, text etc., onto the video as a visual cue. Different colors are used to determine who is doing the annotation. Video may be captured with our without annotation information to file. In addition to video, any user can also take "snapshots" of the video stream at any time. The snapshots can also be annotated. Given that the remote client is designed to be used by the field user, on a remote device - its interface is designed to be simplistic and small enough to fit without cumbersome navigation and control. Both video and snapshots can be stored on a central repository 605 for sharing/use by all parties. This will also support submission of video and snapshot captures to the EPSS for inclusion into the EPSS repository 305 as part of the overall procedure library.

The expert user client 604 is similar to that used by the remote client with one exception. As the expert will tend to be sitting in an office on a workstation, the expert client will be more full featured. The interface will include multiple concurrent integrated windows. One window will display the streaming vide or snapshot currently being reviewed. Another optional window will display the current session participants with annotation color coding. Another optional window will display current list of support files which will include all saved video stream and snapshot captures. Another optional window will display the current CMMS work order and EPSS procedure and step information.

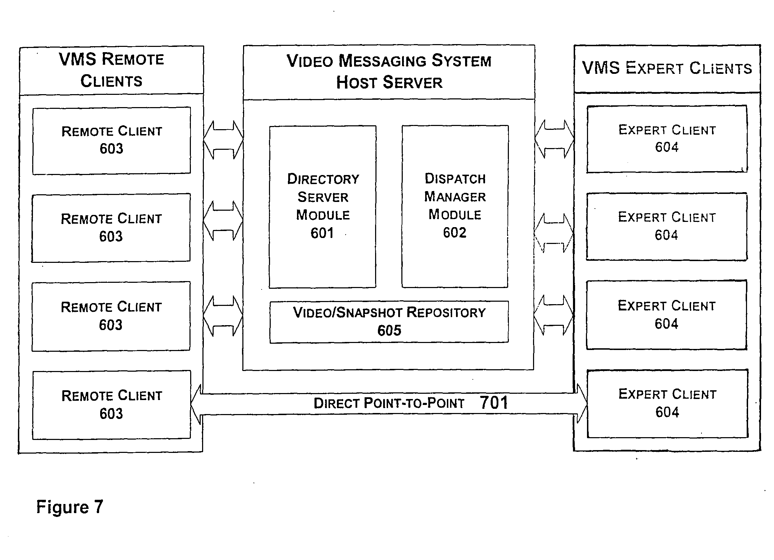

Figure 7 illustrates the Video Messaging System with point to point client communication. Figure 7 is an alternative to Figure 6 and differs in that once the remote clients and expert clients have initiated a session, the directory server could hand off IP information to allow the remotes and experts to communicate directly 701, thus potentially improving performance.

The interfaces between each of the core software systems are an important aspect of the present invention. In Figure 1 this is represented by the arrows between the CMMS and EPSS 110, FMS and CMMS 106/ EPSS 107, VMS and CMMS 109 / EPSS 108. The following sections describe these interfaces in detail.

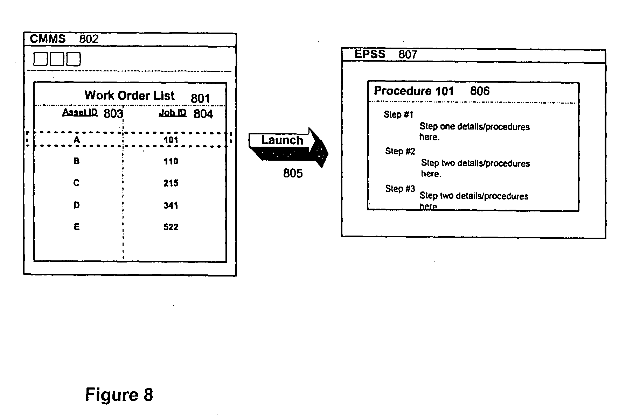

Figure 8 illustrates a preferred embodiment of the CMMS to EPSS user interface. A primary function of the CMMS software is to generate a work order. The work order is a used to define a specific/standard job to be performed, on a specific asset, for example, change the oil in an identified vehicle. The typical work order will have a simple job description and possibly a simple list of steps on how to perform the job.

The EPSS software on the other hand provides a specific set of procedural instructions for generic job descriptions. The instructions are asset independent, for example, an EPSS might provide the specific steps to change the oil for a specific type of vehicle. When the EPSS software is launched, the user is presented with the entire set of topics - procedures - available to the user.

In this invention, these two pieces of software are more tightly coupled. In a preferred embodiment of the present invention, the end user is presented with a list of work orders 801 that have been generated for the user within the CMMS 802. This listing provides at a minimum the primary identification information for the work order. This includes the work order identification, the asset identification 803, and the standard job number 804. From this listing the user can launch 805 the EPSS software and go directly to the appropriate job instructions 806 within the EPSS 807 for a specific work order in the list.

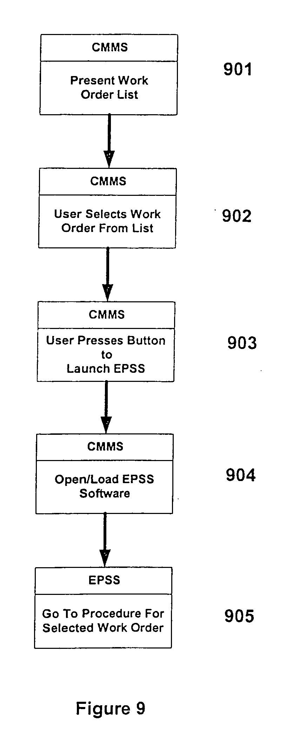

Figure 9 illustrates the preferred embodiment of CMMS to EPSS interface depicted in Figure 8 in a flow diagram. The work order listing can be provided within the CMMS. Within the CMMS, the user can access the work order list 901. At step 902, the user selects a specific work order from the list. At step 903, the user launches the EPSS from the CMMS by deselecting key or button. At step 904, the EPSS software is open or loaded. Finally, at step 905, the appropriate procedural instructions within the EPSS repository is launched.

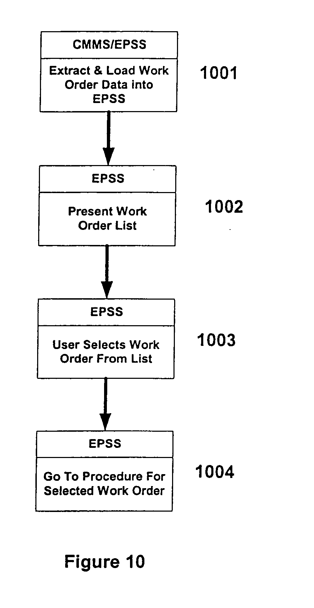

Figure 10 illustrates a process flow for an alternative embodiment of the CMMS to EPSS interface. The work order listing can be provided within the EPSS. An interface exists between the EPSS and CMMS where the work order list data is extracted in either real-time, on demand, or via a scheduled batch mode 1001. At step 1002, the work order list data is loaded into the EPSS Library or database. Once loaded into the EPSS, the work order list can be presented to end user 1003 where upon selecting a specific work order in the list; they can go to the appropriate procedural instructions within the EPSS repository 1004.

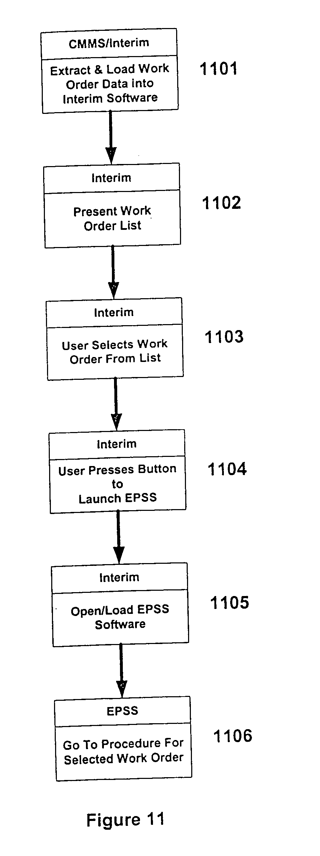

Figure 11 illustrates a process flow for another alternative embodiment of the CMMS to EPSS interface. The work order listing can be provided within a 3^{rd} piece of software. An interface exists between this 3^{rd} piece of software and CMMS where the work order list data is extracted in either real-time, on demand, or via a scheduled batch mode and is loaded into the 3^{rd} piece of software's memory or database 1101. Within the 3^{rd} piece of software, the user can access the work order list 112. At step 1103, the user can select a specific work order in the list. At step 1104, the user can execute an EPSS launch capability built into the software. At step 1105, the user can then open or launch EPSS software. Finally, at step 1106, the user can to go to the appropriate procedural instructions within the EPSS repository.

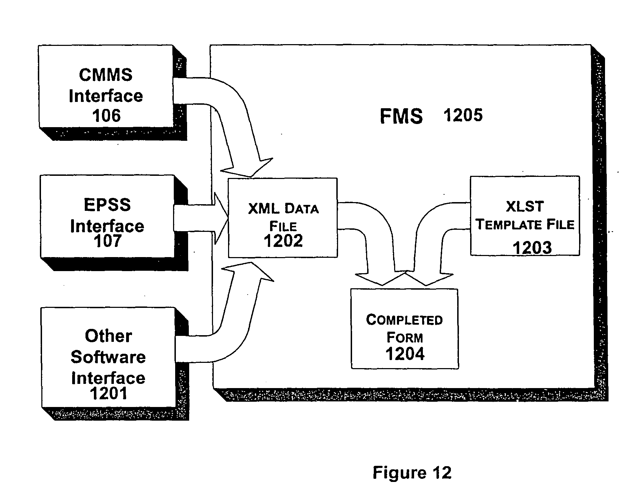

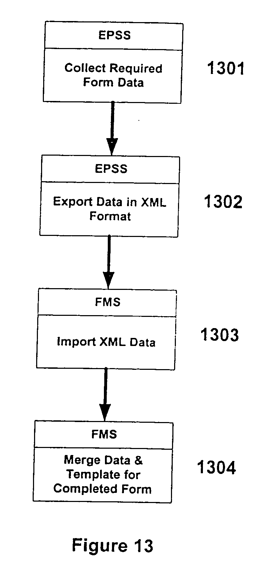

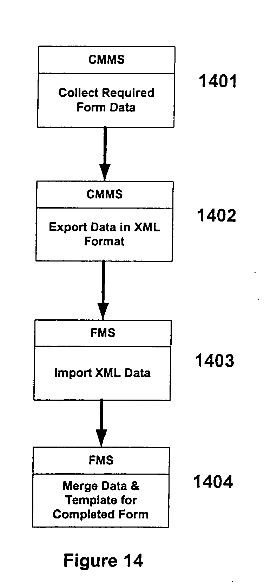

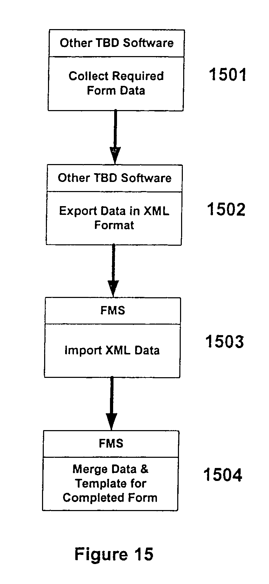

Figure 12 illustrates the FMS and CMMS/EPSS interface. As stated above, neither the CMMS or EPSS software readily support the specific work order or inspection collection and output formats that are required by either the end user organizations, regulatory agencies, or potentially other interested parties. This deficiency is addressed by providing form templates and data integration, using data collected in the CMMS 106 - described below in Figure 14 -, EPSS 107 - described below in Figure 13 -, or other suitable or custom software systems 1201 - described below in Figure 15 - to output completed forms in the proper format using a sub component of the FMS. This sub component of the FMS 1205 is used to integrate the form templates 1203 with the data collected 1202 in the CMMS, EPSS, or other suitable software systems and to output the completed forms 1204. It is preferred to use XML as the data format; however, other known or future format structured data files may be used.

Figure 13 illustrates in a flow chart format the FMS to EPSS interface as described above in relation to Figure 12. The EPSS software can be augmented to collect the required inspection and maintenance data for each step within the EPSS procedure 1301. As part of the EPSS development module, these collection points would have to be defined and tagged with the appropriate unique FMS data mapping tags. Upon collection, the EPSS could be augmented to export the collected data into the appropriate XML storage format 1302 and exported or made available for use within the FMS 1303. Further EPSS augmentation would include making the XML form templates available from the FMS to the EPSS 1304 so that the EPSS users could preview the forms prior to submission.

Figure 14 illustrates in a flow chart format the FMS to EPSS interface as described above in relation to Figure 12. The CMMS software can be augmented to collect the required inspection and maintenance data for each work order 1401. As part of the CMMS setup capabilities, these collection points would have to be defined and tagged with the appropriate unique FMS data mapping tags. Upon collection, the CMMS could be augmented to export the collected data into the appropriate XML storage format 1402 and exported or made available for use within the FMS 1403. Further CMMS augmentation would include making the XML form templates available from the FMS to the CMMS 1404 so that the CMMS users could preview the forms prior to submission.

Figure 15 illustrates in a flow chart format the FMS to other suitable software interface 1201 interface as described above in relation to Figure 12. Another software module can be used to collect the required inspection and maintenance data for each work order 1501. As part of this software setup capabilities, the collection points would have to be defined and tagged with the appropriate unique FMS data mapping tags. Upon collection, the software would export the collected data into the appropriate XML storage format 1502 and exported or made available for use within the FMS 1503. Further software capabilities would include making the XML form templates available from the FMS to the software so that the users could preview the forms prior to submission 1504.

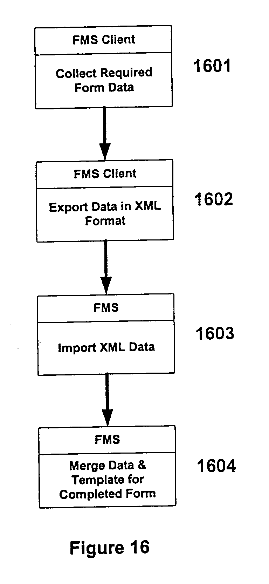

Figure 16 illustrates a further embodiment of a FMS standalone/client interface. In this embodiment, the FMS client is standalone. At step 1601, the user collects the required form data. At step 1602, the software is used to collect the data, preview the forms, validate the data, and export the final completed form to the host FMS for final review, approval, printing, and archive/storage. At step 1603, the data is available for import and at step 1604 the data and template are merged resulting in a completed form.

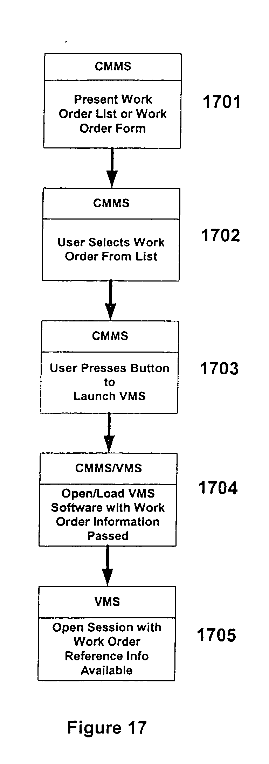

Figure 17 illustrates a preferred embodiment of the CMMS to VMS interface. A primary deficiency of VMS software is that when a session is started, there is no supporting information attributed to the session other than who the participants are. By making CMMS or EPSS status information available to the session when it is initiated, significant efficiencies are achieved. At step 1701, a VMS session is launched from within the CMMS software. When launched, the session will be initiated with the current user information and the current work order information passed into the VMS 1702. This will include the asset identification information and the job identification information. This information can be used by the VMS dispatcher - either a person or rules - to invite all appropriate parties to the session is available to all review upon joining a session. At step 1703, the user launches the VMS by either deselecting a button or activating an icon. At step 1704, the open/load VMS software with work order information is passed to the VMS. At step 1705, the session is open with work order reference information available.

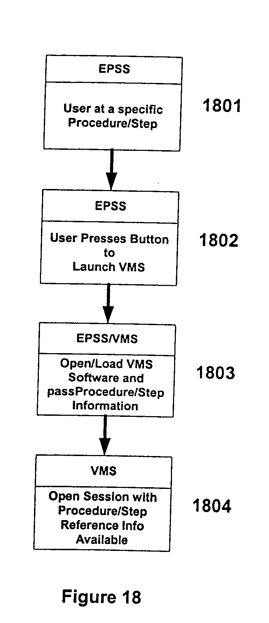

Figure 18 illustrates a preferred embodiment to the interface between the EPSS and VMS. At step 1801, VMS session is launched from within the EPSS software. When launched 1802, the session will be initiated with the current user information and the current work order information passed into the VMS. In addition, the current EPSS procedure and step, along with the prior step path information will also be passed into the VMS to further augment the information available to all session participants 1803. This will include the asset identification information and the job identification information. This information can be used by the VMS dispatcher - either a person or rules - to invite all appropriate parties to the session and is available to all review upon joining a session 1804. Once participating in a session, any other VMS users should be able to launch an EPSS session and go directly to the appropriate procedure and step with the EPSS system. This allows multiple parties to be looking at the same data/reference material.

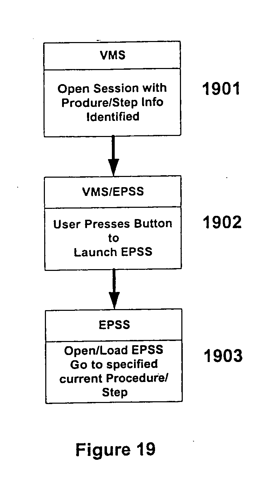

Figure 19 illustrates a preferred embodiment to the VMS to EPSS interface. At step 1901, an open session with procedure/step information identified. Once participating in a session, any other VMS users should be able to launch an EPSS session 1902 and go directly to the appropriate procedure and step with the EPSS system 1903. This allows multiple parties to be looking at the same data/reference material.

The present embodiments of this invention are thus to be considered in all respects as illustrative and not restrictive; the scope of the invention being indicated by the appended claims rather than by the foregoing description. All changes that come within the meaning and range of equivalency of the claims are intended to be embraced therein.

## Claims

1. A system for management and inspection of an asset comprising:
a first computer configured and operable to run at least two software modules including a computerized maintenance management system (CMMS), a electronic performance support system (EPSS), and a video messaging system (VMS);
a second computer configured and operable to communicate and interact with said first computer, said second computer further configured with at least an electronic performance support client software.

2. The system according to claim 1, **characterized in that** said first computer is configured and operable to run at least three software modules including said computerized maintenance management system (CMMS), said electronic performance support system (EPSS) and said video messaging system (VMS).

3. The system according to claim 1 or 2, **characterized in that** said first computer is enabled to run at least VMS and EPSS server software; said second computer is enabled to run at least VMS and EPSS client software; and computer program means for enabling communication between the client and server software on said first and said second computer are provided wherein said program means has means to launch a VMS session from within the EPSS client software, means to pass information to server, said information at least including first computer user, current work order information, current EPSS procedure and step, and prior step path information, asset identification information, job identification information, means to allow a second user to communicate with the VMS server and access said information passed to the server from the client computer and interact with said first computer user.

4. The system according to anyone of the preceding claims, **characterized in that** said first computer is further configured and operable to run forms management system software (FMS).

5. The system according to anyone of the preceding claims, **characterized in that** at least said second computer is a mobile computer.

6. The system according to anyone of the preceding claims, **characterized in that** said computerized maintenance management system generates a work order list comprising at least one work order including work order identification, asset identification, and standard job number.

7. The system according to claim 6, **characterized in that** said work order includes a job to be performed for a specific asset.

8. The system according to claim 6 or 7, **characterized in that** said electronic performance support software is activated subsequent to said work order list generation allowing a user to retrieve a specific set of procedural instructions for a specific work order on said work order list.

9. A method, especially to be used in the system according to anyone of the preceding claims, **characterized by** comprising the steps of:
using a client computer configured with at least an EPSS and VMS client software by a first user to perform a task on a asset;
launching a VMS session from within the EPSS client software;
passing information to server configured with at least a VMS server software said information at least including said first user, current work order information, current EPSS procedure and step, and prior step path information, asset identification information, job identification information;
allowing a second user to communicate with the VMS server and accessing said information passed to the server from the first user's client computer and interact with said first user.

10. The method according to claim 9, **characterized by** further comprising the step of after the step of accessing said information passed to the server from the first user's client computer, establishing a video or audio connection between said first user and said second user.

11. The method according to claim 9 or 10, **characterized by** further comprising the step of after the step of allowing a second user to communicate with the VMS and interact with said first user, allowing a third user to launch an EPSS session and access the appropriate procedure and step and interact with said first and said second user.

12. The method according to one of the claims 9 to 11, **characterized by** further comprising the step of after the step of allowing a second user to communicate with the VMS and interact with said first user, allowing said first user and said second user to communicate directly without needing to communicate through the VMS server.

13. A method for completing a form, especially to be used in the system according to anyone of the preceding claims, **characterized by** comprising the steps of:
- using a client computer configured with at least an EPSS or CMMS on the one hand and FMS on the other hand client software by a user to collect data for each step within an EPSS or CMMS procedure on a asset;
- using a server computer configured with at least an EPSS or CMMS server software on the one hand and FMS server software on the other hand said EPSS server software or CMMS server software configured to define and tag collection points corresponding to said step with appropriate unique FMS data mapping tags;
- exporting said collected data into appropriate storage format from said EPSS client / CMMS client to said FMS server software;
- combining a form template file within said FMS server software with said collected data to produce a completed form.

14. The method according to claim 13, **characterized by** further comprising the steps of after the step of combining, allowing said form template file to be available for preview by said user from said FMS server software to said EPSS client software / CMMS client software.

15. The method according to claim 13 or 14, **characterized in that** said data is in XML format.

16. A method for completing a form, especially to be used in the system according to anyone of the preceding claims, **characterized by** comprising the steps of:
using a client computer configured with at least FMS client software by a user to collect data for each step within an procedure on a asset;
using a server computer configured with at least FMS server software;
exporting said collected data into appropriate storage format from said FMS client to said FMS server software;
combining a form template file within said FMS server software with said collected data to produce a completed form.

17. A method for loading a procedure within a work order, especially to be used in the system according to anyone of the preceding claims, **characterized by** comprising the steps of:
using a server configured with at least CMMS and EPSS server software and a client computer configured with at least EPSS client software;
providing a work order listing including at least one work order from within said CMMS software;
accessing said work order list within said CMMS; selecting at least one work order from within said work order list;
launching said EPSS from said CMMS by activating a key on said client;
opening said EPSS software on said client;
accessing a procedural instruction within said EPSS.
